Europäisches Patentamt

European Patent Office

Office européen des brevets

(19)

(11) Numéro de publication : **0 106 723**
**B1**

(12) # FASCICULE DE BREVET EUROPÉEN

(45) Date de publication du fascicule du brevet :
**28.05.86**

(21) Numéro de dépôt : **83401735.2**

(22) Date de dépôt : **01.09.83**

(51) Int. Cl.⁴ : **B 60 T 13/24**

(54) Servomoteur d'assistance au freinage à système amplificateur d'effort entre le piston et l'organe de sortie.

(30) Priorité : **30.09.82 FR 8216451**

(43) Date de publication de la demande :
**25.04.84 Bulletin 84/17**

(45) Mention de la délivrance du brevet :
**28.05.86 Bulletin 86/22**

(84) Etats contractants désignés :
**BE DE GB IT NL SE**

(56) Documents cités :
**DE-A- 2 304 834**
**DE-A- 3 112 343**
**US-A- 4 186 650**

(73) Titulaire : **BENDIX France**
**126, rue de Stalingrad**
**F-93700 Drancy (FR)**

(72) Inventeur : **Carré, Jean-Jacques**
**59 Bld de l'Est**
**F-93340 Le Raincy (FR)**

(74) Mandataire : **Le Moenner, Gabriel et al**
**SERVICE BREVETS BENDIX 44, Rue François 1er**
**F-75008 Paris (FR)**

EP 0 106 723 B1

Jouve, 18, rue St-Denis, 75001 Paris, France

Description

La présente invention concerne les servo-moteurs d'assistance au freinage du type comprenant un boîtier, une structure de piston d'assistance déplaçable dans le boîtier et divisant celui-ci en deux chambres, un organe de sortie actionnable par la structure de piston, destiné à être connecté à un piston de maître-cylindre, un organe d'entrée, destiné à être relié à une pédale de frein d'un véhicule automobile, et un moyen de valve actionnable par l'organe d'entrée pour contrôler sélectivement une différence de pression dans les deux chambres, et un système articulé amplificateur d'effort reliant la structure de piston à l'organe de sortie.

Des servo-moteurs d'assistance de ce type sont décrits par exemple dans la demande de brevet allemand 2 304 834 et dans le brevet U.S. 4 186 650.

Dans ces documents, le système amplificateur d'effort est agencé autour d'un levier basculant disposé dans l'une ou l'autre des chambres du boîtier et, impliquant, de ce fait, des ancrages articulés du levier et des mécanismes d'articulation ou d'appui de réaction et de transmission de force, non seulement sur l'organe de sortie et la structure de piston d'assistance, mais également sur le boîtier lui-même, avec les inconvénients afférents.

La présente invention a, précisément, pour objet de proposer un servo-moteur d'assistance au freinage du type sus-mentionné permettant une réduction du maître-couple du boîtier et donc, une réduction notable des déformations sous charge de ce boîtier, en mettant en œuvre un système amplificateur d'effort de poids et d'inertie réduits, dans lequel les risques de grippage ou de blocage sont exclus et autorisant une amplification d'effort progressive, et un fonctionnement silencieux.

Pour ce faire, selon la présente invention, dans un servo-moteur d'assistance au freinage du type sus-mentionné le système amplificateur d'effort comprend au moins un organe allongé souple de traction ayant ses extrémités opposées fixées respectivement à la structure de piston et au boîtier et s'enroulant partiellement à repliement autour d'un élément de renvoi solidaire d'un fourreau de valve coopérant avec l'organe de sortie.

La présente invention a pour autre objet de proposer un servo-moteur de type défini ci-dessus, permettant un actionnement direct de l'organe de sortie par l'organe d'entrée, typiquement via un organe de réaction, en cas de défaillance du système de puissance pneumatique sans que la structure de piston inopérante soit déplacée lors de cet actionnement.

Pour ce faire, le moyen de valve est disposé dans un fourreau de valve tubulaire formant les canaux de distribution de fluide reliant le moyen de valve et les chambres du boîtier, au travers duquel s'étend axialement l'organe d'entrée, la structure de piston comprenant un moyeu tubulaire coulissant sur le fourreau de valve.

D'autres caractéristiques et avantages de la présente invention ressortiront de la description suivante d'un mode de réalisation, donné à titre illustratif mais nullement limitatif, faite en référence avec les dessins annexés, sur lesquels :

La Figure 1 est une vue coupe longitudinale d'un servo-moteur selon l'invention ;

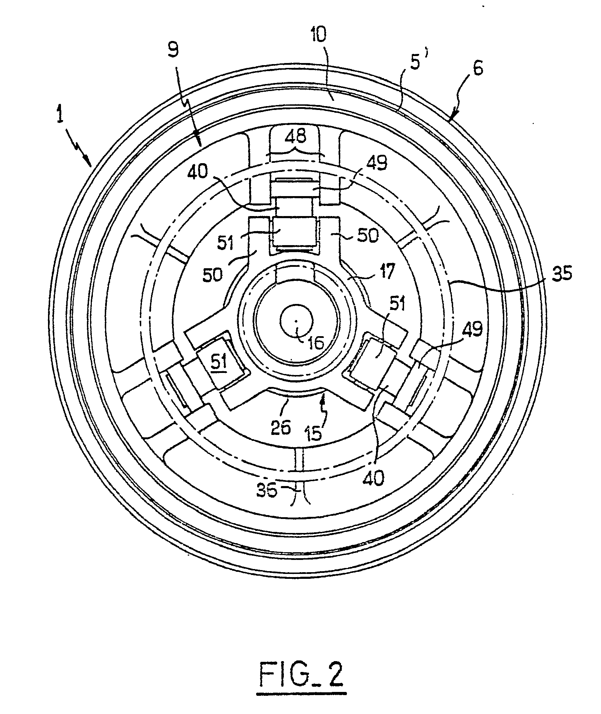

Et la Figure 2 est une vue en coupe transversale suivant la ligne II-II de la Figure 1.

Le servo-moteur d'assistance au freinage selon l'invention, avantageusement du type à dépression, comprend classiquement un boîtier 1 constitué par l'assemblage périphérique de deux coquilles 2 et 3, typiquement en tôle, comprenant chacune une paroi de fond 4, 4' et une partie de virole externe sensiblement cylindrique 5, 5' assemblés par un sertissage 6, de façon à définir dans le boîtier 1 une cavité étanche en configuration de montage assemblée du servo-moteur avec le maître-cylindre (non représenté) auquel il est associé. Cette cavité interne est divisée en deux chambres 7 et 8 par une structure de piston d'assistance 9 associée à une membrane 10 dont le bourrelet périphérique est pris dans le sertissage 6 d'assemblage des deux coquilles 2 et 3 du boîtier 1. Typiquement, la coquille 3 est pourvue d'un embout de raccord à une canalisation reliée à une source de vide, la chambre 7 étant ainsi la chambre de dépression du boîtier.

Le servo-moteur comprend en outre un fourreau de valve tubulaire creux 11, dans lequel est disposé un moyen de valve 12 de facture classique, par exemple du type de celui décrit dans le brevet US 4 186 650 sus-mentionné, comprenant un plongeur de valve 13 couplé directement à une tige 14 s'étendant axialement au travers du fourreau de valve 11 et constituant l'organe d'entrée du servo-moteur, cette tige 14 étant destinée à être reliée à une pédale de frein du véhicule automobile.

Conformément à la présente invention, l'organe de sortie 15 du servo-moteur, en ligne avec l'organe d'entrée 14, comprend, outre la tige classique 16 de connexion à un piston de maître-cylindre (non représenté) destiné à être monté sur la paroi de fond 4' de la coquille 3 du boîtier 1, une partie de corps cylindrique en forme de coupe dont le fond coopère avec le disque de réaction 170 interposé entre l'organe de sortie et le plongeur de valve 13. Dans l'exemple représenté, le disque de réaction 170 est monté dans une coupelle 18 solidaire de la partie de la tige 16 et s'étendant dans la direction axialement opposée à la tige 16, la paroi périphérique de la coupelle 18 étant reçue dans une fente axiale annulaire 19 du moyeu central portant à coulissement le plongeur 13 du fourreau de valve 11. Ce fourreau de valve 11 comporte en outre un passage 20 reliant le moyen de valve 12 à la chambre de dépression 7 et un passage 21 reliant le moyen de valve 12 à l'autre chambre 8 du boîtier 1. L'extrémité du fourreau de valve 11 se termine du côté opposé à la tige 14 par une partie de corps en forme de tube 17.

Conformément à l'invention, le moyeu de valve 11 définit sur la majeure partie de sa longueur, une portée cylindrique externe 22 avec laquelle coopère en coulissement étanche un joint annulaire 23 porté par un prolongement tubulaire arrière 24 de diamètre réduit de la coquille 2. Selon un aspect de l'invention, la structure de piston 9 comprend un moyeu tubulaire 25 s'étendant axialement vers l'arrière et comprenant un alésage central définissant une portée tubulaire interne 26 coopérant à coulissement étanche avec la paroi périphérique 27 de diamètre élargi de l'extrémité avant du fourreau 11 pourvue d'un joint d'étanchéité annulaire 28. L'extrémité arrière du moyeu tubulaire 25 de la structure de piston comporte une paroi de fond annulaire s'étendant radialement vers l'intérieur 29 portant à coulissement sur la portée périphérique externe 22 du moyeu de valve 11. Le plongeur de valve 13 est pourvu classiquement, dans sa zone médiane, d'une gorge annulaire 30 recevant une extrémité d'une clavette 31 emmanchée radialement dans la partie avant du moyeu de valve 11 au droit du passage 21, par exemple comme décrit dans la demande de brevet français n° 82-14388 (correspondant à EP-A-101 658) de la demanderesse. Une ouverture 32 est en conséquence prévue dans la paroi de fond 29 du moyeu tubulaire 25 de la structure de piston 9 pour permettre la communication entre le passage 21 et la chambre 8. Dans l'exemple représenté, la course en retour (après actionnement) du moyeu tubulaire 11 est limitée par une clavette 33 montée sur le fourreau 11 et venant porter contre un épaulement radial 34 formé par le prolongement tubulaire arrière 24 de la coquille 4 en avant du joint 23. La clavette 33 forme ainsi simultanément butée de retour pour la structure de piston 9 en coopérant avec la face extérieure de la paroi d'extrémité annulaire 29 sous l'effet de la sollicitation du ressort de rappel de structure de piston 35 disposé entre la paroi de fond 4' de la coquille 3 et des nervurages intérieurs 36 de la partie de corps de la structure de piston 9. En variante, la clavette 31 du plongeur de valve 13 peut être prolongée radialement vers l'extérieur au travers d'une ouverture du moyeu tubulaire 25 de la structure de piston 9 pour coopérer en butée avec la paroi de fond annulaire 4 de la coquille 2, le joint 28 étant alors porté par la structure de piston 9.

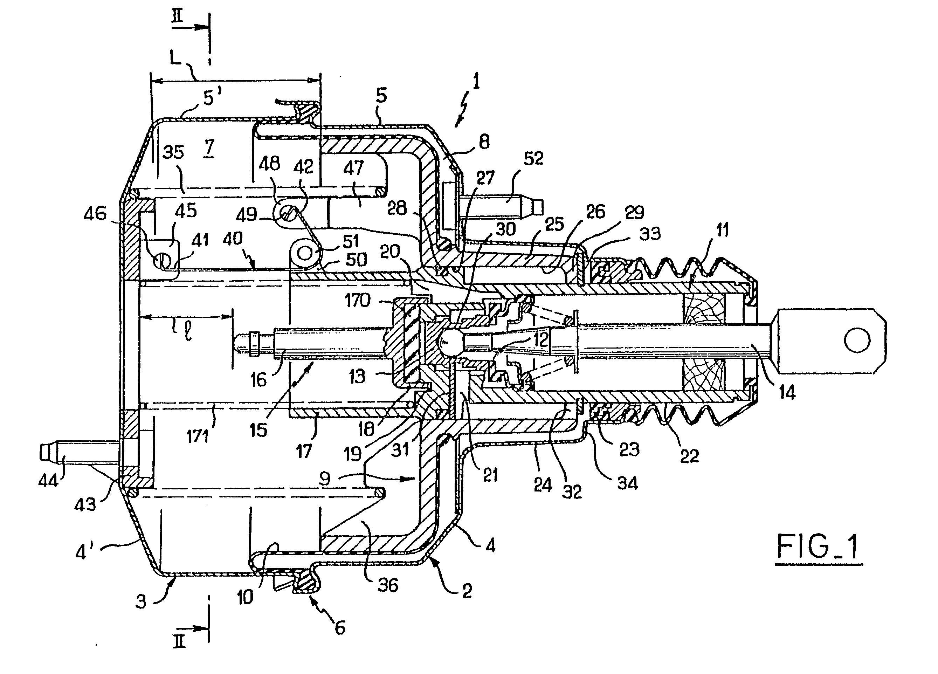

Conformément à l'invention, le système amplificateur d'effort entre la structure de piston 9 et l'organe de sortie 15 comprend au moins un, de préférence trois, organes allongés souples 40 angulairement répartis dont les extrémités opposées 41 et 42 sont respectivement solidarisées à la paroi de fond 4' de la coquille 3 et à la structure de piston 9. Dans l'exemple représenté, la paroi de fond annulaire 4' de la coquille 3 est munie d'un renfort annulaire central 43 au travers duquel s'étendent les vis 44 d'assemblage du maître-cylindre sur cette coquille 3 du boîtier 1. Le renfort annulaire 43 comporte, pour le montage de chaque extrémité 41 d'organe allongé 40, deux ailes 45 s'étendant axialement vers l'intérieur dans lesquelles est monté transversalement un axe 46 pourvu d'une fente diamétrale au travers de laquelle est engagée l'extrémité 41 de l'organe allongé souple 40. De façon similaire, la partie de corps de la structure de piston 9 comporte, pour chaque organe allongé 40, un bras 47 s'étendant axialement en saillie dans la direction opposée au moyeu tubulaire 25, et, donc en direction vers la paroi de fond 4' de la coquille 3, le bras 47 étant terminé par deux ailes parallèles en forme de fourche 48 dans lesquelles est monté transversalement un axe 49 également pourvu d'une fente diamétrale dans laquelle est engagée l'extrémité correspondante 42 de l'organe souple 40. Dans la pratique, l'organe souple 40 est constitué par une bande métallique ou de matériau plastique à haute résistance à la traction. La partie de corps en forme de tube 17 du moyeu tubulaire 11 comporte périphériquement, pour chaque bande 40, deux pattes parallèles 50 s'étendant radialement vers l'extérieur, disposées à l'extrémité avant de la partie de corps 17 et entre lesquelles s'étend tourillonnant transversalement un rouleau de renvoi 51. Comme on le voit sur les dessins, le diamètre de l'alésage interne 26 du moyeu tubulaire 25 (et, partant, le diamètre externe 27 de la partie avant du fourreau de valve 11) est supérieur au diamètre externe de la partie de corps en forme de tube 17 du moyeu tubulaire 11. De plus, dans la position de repos ou de butée en recul de l'équipage mobile représentée sur la figure 1, l'axe 49 se trouve disposé en deçà du rouleau 51, c'est-à-dire légèrement en avant de ce dernier, entre celui-ci et l'axe 46 de fixation de l'autre extrémité 41 de la bande 40. Cette bande 40 est donc en permanence tendue à repliement partiel autour du rouleau 51, la tension de la bande 40 étant réglée par rotation, par exemple, de l'axe 46. On comprendra ainsi que, en exerçant un effort d'application de freinage sur la tige d'entrée 14, la valve 12 isolera la chambre 8 de la chambre de dépression 7 en admettant dans cette chambre 8 de la pression atmosphérique régnant à l'intérieur de la partie d'extrémité du fourreau de valve 11 pour créer ainsi de part et d'autre de la structure de piston 9 une différence de pression sollicitant ce dernier dans le sens d'actionnement de la tige 14, à l'encontre du ressort de rappel 35, c'est-à-dire en déplaçant l'extrémité 42 de la bande 40 dans la direction de l'autre extrémité 41 de la bande ancrée sur la paroi de fond 4' en entraînant de ce fait, via le rouleau 51 et le moyeu tubulaire 11, l'organe de sortie 15 avec l'amplification d'effort recherchée, la course nominale L de la structure de piston 9 étant sensiblement double de la course nominale l de l'organe de sortie 15, 16, telle que requise pour l'actionnement total des pistons du maître-cylindre. On comprendra que l'amplification d'effort résultant de l'effort de réaction induit sur le rouleau 51 par la mise sous tension des brins de la bande 40 permet de réduire en conséquence le diamètre du servo-moteur et, donc, de limiter grandement les risques de déflexion de déformation des parois frontales 4 et 4' des coquilles du boîtier dont les viroles 5 et 5', travaillant en traction pure, ne subissent, pour leur part, aucune déformation axiale notable. En position assemblée, l'organe de sortie 15 est normalement maintenu plaqué contre l'organe de réaction 170 par les ressorts de piston du maître-cylindre. On prévoira avantageusement un ressort de rappel supplémentaire 171 entre le moyeu tubulaire 11 et la paroi de fond 4' ou son renfort annulaire 43.

De façon conventionnelle, des vis de fixation 52 sont prévues sur la paroi de fond 4 de la coquille 2 pour le montage de l'ensemble boîtier/maître-cylindre sur une paroi fixe du véhicule, un renfort annulaire interne analogue au renfort 43 pouvant en outre, être prévu à cet effet.

Dans un mode de réalisation non représenté, le moyeu tubulaire 25 est tourné dans la direction de la partie du corps en forme de tube 17, et coulisse sur celui-ci. Dans ce mode de réalisation le moyeu tubulaire 25 présente des découpes circonférentiellement espacées pour assurer le passage des pattes 50, le joint 28 étant alors porté par le moyeu tubulaire 25.

**Revendications**

1. Servo-moteur d'assistance au freinage, comprenant un boîtier (1), une structure de piston d'assistance (9) déplaçable dans le boîtier et divisant celui-ci en deux chambres (7 ; 8), un organe de sortie (15) actionnable par la structure de piston (9), un organe d'entrée (14), un moyen de valve (12) actionnable par l'organe d'entrée pour contrôler sélectivement une différence de pression dans les deux chambres (7, 8) et un système articulé amplificateur d'effort (40 ; 51) reliant la structure de piston (9) à l'organe de sortie (15), caractérisé en ce que le système amplificateur d'effort comprend au moins un organe allongé souple de traction (40) ayant ses extrémités opposées (42 ; 41) fixées respectivement à la structure de piston (9) et au boîtier (1 ; 3) et s'enroulant partiellement à repliement autour d'un élément de renvoi (51) solidaire d'un fourreau de valve (11) coopérant avec l'organe de sortie (15).

2. Servo-moteur selon la revendication 1, caractérisé en ce que l'organe allongé souple (40) a une première extrémité (41) fixée à une zone frontale (4', 43) du boîtier (1) et son autre extrémité (42) fixée à une partie en saillie (47, 48) de la structure de piston (9) s'étendant normalement axialement, en position de repos du servo-moteur, au-delà de l'élément de renvoi (51) du fourreau de valve (11) dans la direction vers ladite zone frontale (4', 43) du boîtier (1).

3. Servo-moteur selon la revendication 1 ou la revendication 2, dans lequel le moyen de valve (12) est disposé dans le fourreau de valve (11) formant des canaux (20, 21) de distribution de fluide reliant le moyen de valve (12) et les chambres (7, 8) du boîtier, au travers duquel s'étend axialement l'organe d'entrée (14), caractérisé en ce que la structure du piston (9) comprend un moyeu tubulaire (25) coulissant sur le fourreau de valve (11).

4. Servo-moteur selon la revendication 3, caractérisé en ce que le fourreau de valve (11) forme portée de coulissement (27) étanche (28) pour un alésage (26) du moyeu tubulaire (25) de la structure de piston (9).

5. Servo-moteur selon la revendication 1 à 4, caractérisé en ce que le fourreau de valve (11) comprend une partie de corps cylindrique (17) portant l'organe de renvoi (51).

6. Servo-moteur selon la revendication 4 et la revendication 5, caractérisé en ce que la partie du corps (17) du fourreau de valve (11), a un diamètre externe inférieur au diamètre interne de l'alésage (26) du moyeu tubulaire (25) de la structure de piston (9).

7. Servo-moteur selon l'une des revendications 2 à 6, caractérisé en ce que l'organe allongé souple (40) est une bande dont les deux extrémités sont logées dans des fentes d'éléments d'axes (46 ; 49) solidaires respectivement de la zone frontale (4', 43) du boîtier (1) et de la structure de piston (9).

8. Servo-moteur selon la revendication 7, caractérisé en ce que l'élément d'axe (46) de fixation de la première extrémité (41) de la bande (40) est monté sur une fourchette (45) solidaire d'un organe de renfort annulaire central (43) de la paroi de fond (4') du boîtier correspondante.

9. Servo-moteur selon l'une des revendications précédentes, caractérisé en ce qu'il comprend trois organes allongés souples (40) angulairement répartis.

10. Servo-moteur selon l'une des revendications 2 à 9 caractérisé en ce qu'il comprend un organe de rappel élastique (171) entre la zone frontale (4', 43) du boîtier (1) et l'organe de sortie (17).

**Claims**

1. A brake servo motor comprising a casing (1), a servo piston assembly (9) displaceable in the casing and dividing the latter into two chambers (7 ; 8), an output member (15) actuatable by the piston assembly (9), an input member (14), a valve means (12) actuatable by the input member selectively to control a pressure difference in the two chambers (7 ; 8), and an articulated force-amplifying system (40 ; 51) connecting the piston assembly (9) to the output member (15), characterized in that the force-amplifying system comprises at least a flexible elongated traction member (40) having its opposite ends (42 ; 41) fixed respectively to the piston assembly (9) and the casing (1 ; 3) and partially surrounding a reversing element (51) fixed to a valve housing (11) cooperating with the output member (15).

2. The servo motor of claim 1, characterized in that the flexible elongated member (40) has a first end (41) fixed to a front portion (4' ; 43) of the casing (1) and its other end (42) fixed to a projecting portion (47 ; 48) of the piston assembly (9) extending in the rest portion of the servo motor normally axially beyond the reversing element (51) of the valve housing (11) in the direction towards said front portion (4' ; 43) of the casing (1).

3. The servo motor of claim 1 or claim 2 wherein the valve means (12) is disposed in the valve housing (11) forming fluid-distributing passages (20 ; 21) connecting the valve means (12) and the chambers (7 ; 8) of the casing through which the input member (14) axially extends, characterized in that the piston assembly (9) comprises a tubular hub (25) sliding on the valve housing (11).

4. The servo motor of claim 3, characterized in that the valve housing (11) forms a sealed (28) sliding guide surface (27) for a bore (26) of the tubular hub (25) of the piston assembly (9).

5. The servo motor according to claims 1 to 4, characterized in that the valve housing (11) comprises a cylindrical body portion (17) supporting the reversing element (51).

6. The servo motor of claim 4 and claim 5, characterized in that the body portion (17) of the valve housing (11) has an external diameter which is smaller than the internal diameter of the bore (26) of the tubular hub (25) of the piston assembly (9).

7. The servo motor of any of claims 2 to 6, characterized in that the flexible elongated member (40) is a band, the two extremities of which are seated in slots of pin elements (26 ; 49) fixed respectively to the front portion (4' ; 43) of the casing (1) and the piston assembly (9).

8. The servo motor of claim 7, characterized in that the pin element (46) for fixing the first end (41) of the band (40) is mounted on a fork (45) fixed to a central annular reinforcing member (43) of the corresponding bottom wall (4') of the casing.

9. The servo motor of any of the preceding claims, characterized in that it comprises three flexible elongated members (40) which are angularly spaced.

10. The servo motor of any of claims 2 to 9, characterized in that it comprises a resilient return member (171) between the front portion (4' ; 43) of the casing (1) and the output member (17).

**Patentansprüche**

1. Bremsservomotor mit einem Gehäuse (1), einem Servokolben (9), der in dem Gehäuse verschiebbar ist und dieses in zwei Kammern (7 ; 8) unterteilt, einem Auslaßglied (15), das durch den Servokolben (9) betätigbar ist, einem Einlaßglied (14), einem Ventil (12), das zur wahlweisen Steuerung einer Druckdifferenz in den beiden Kammern (7 ; 8) durch das Einlaßglied betätigbar ist, und einem gelenkigen Kraftverstärkungssystem (40 ; 51), das den Servokolben (9) mit dem Auslaßglied (15) verbindet, dadurch gekennzeichnet, daß das Kraftverstärkungssystem mindestens ein biegsames längliches Zugglied (40) aufweist, dessen entgegengesetzte Enden (42 ; 41) am Servokolben (9) bzw. am Gehäuse (1 ; 3) befestigt sind und teilweise um ein Umlenkorgan (51) läuft, das mit einem Ventilgehäuse (11) fest verbunden ist, das mit dem Auslaßglied (15) zusammenwirkt.

2. Servomotor nach Anspruch 1, dadurch gekennzeichnet, daß das biegsame längliche Zugglied (40) mit einem ersten Ende (41) an einem frontalen Bereich (4' ; 43) des Gehäuses (1) befestigt ist und mit seinem anderen Ende (42) an einem aus dem Servokolben (9) vorstehenden Abschnitt (47, 48) befestigt ist, der sich in der Ruhestellung des Servomotors normalerweise axial über das Umlenkteil (51) des Ventilgehäuses (11) in Richtung des besagten frontalen Bereiches (4', 43) des Gehäuses (1) erstreckt.

3. Servomotor nach Anspruch 1 oder 2, bei dem das Ventil (12) in dem Ventilgehäuse (11) angeordnet ist, in dem Strömungsmittelverteilerkanäle (20 ; 21) gebildet sind, die das Ventil (12) und die Kammern (7 ; 8) des Gehäuses verbinden, durch das sich axial das Einlaßglied (14) erstreckt, dadurch gekennzeichnet, daß der Servokolben (9) eine rohrförmige Nabe (25) aufweist, die auf dem Ventilgehäuse (11) gleitet.

4. Servomotor nach Anspruch 3, dadurch gekennzeichnet, daß das Ventilgehäuse (11) eine abgedichtete (28) Gleitführung (27) für eine Bohrung (26) der rohrförmigen Nabe (25) des Servokolbens (9) bildet.

5. Servomotor nach Anspruch 1-4, dadurch gekennzeichnet, daß das Ventilgehäuse (11) ein zylindrisches Bauteil (17) aufweist, das das Umlenkorgan (51) trägt.

6. Servomotor nach Anspruch 4 und 5, dadurch gekennzeichnet, daß das Bauteil (17) des Ventilgehäuses (11) einen Außendruchmesser hat, der kleiner ist als der Innendurchmesser der Bohrung (26) der rohrförmigen Nabe (25) des Servokolbens (9).

7. Servomotor nach einem der Ansprüche 2-6, dadurch gekennzeichnet, daß das biegsame längliche Zugglied (40) ein Band ist, dessen beide Enden in Schlitzen von Achskörpern (46 ; 49) sitzen, die mit dem frontalen Bereich (4' ; 43) des Gehäuses (1) bzw. dem Servokolben (9) fest verbunden sind.

8. Servomotor nach Anspruch 7, dadurch gekennzeichnet, daß der Achskörper (46) zur Befestigung des ersten Endes (41) des Bandes (40) an einer Gabel (45) angebracht ist, die mit einem zentralen ringförmigen Versteifungselement (43) der entsprechenden Bodenwand (4') des Gehäuses fest verbunden ist.

9. Servomotor nach einem der vorhergehenden Ansprüche, dadurch gekennzeichnet, daß er drei in Umfangsrichtung verteilte biegsame längliche Zugglieder (40) aufweist.

10. Servomotor nach einem der Ansprüche 2-9, dadurch gekennzeichnet, daß er ein elastisches Rückholorgan (171) zwischen dem frontalen Bereich (4' ; 43) des Gehäuses (1) und dem Auslaßglied (17) aufweist.

FIG_1

0 106 723

FIG_2